# EUROPEAN PATENT APPLICATION

(11) **EP 1 956 849 A1**
(43) Date of publication of application: **13.08.2008**
(21) Application number: 08100870.8
(22) Date of filing: 24.01.2008
(51) Int. Cl.: H04Q 1/14, H04M 3/22

(54) **Connection system and method for telephone and/or data lines**

(30) Priority: 02.02.2007 IT TV20070011
(71) Applicant: Visionee SRL, 31050 Ponzano Veneto (TV) (IT)
(72) Inventor: Simonato, Graziano, 31055 Quinto di Treviso (Treviso) (IT)
(74) Representative: Dragotti, Gianfranco

(57) **Abstract**

Connection system for lines (Wb) of domestic or industrial users (B) to be connected to one or more telephone lines (Wext) and/or to the outputs (C-out) of a converter (Conv) which have an electrical signal obtained from an optical fibre signal (F), characterized in that it comprises signal switching means (Sw) which can be configured between the user lines (Wb), the telephone lines (Wext) and the outputs (C-out) of the converter (Conv), so as to switch selectively to a line (Wb) of the user (B) a telephone line (Wext) or an output (C-out) of the converter (Conv).

## Description

The invention relates to a connection system and method for telephone and/or data lines.

It is known that domestic or industrial users must be connected to the public telephone and external data network (World Wide Web).

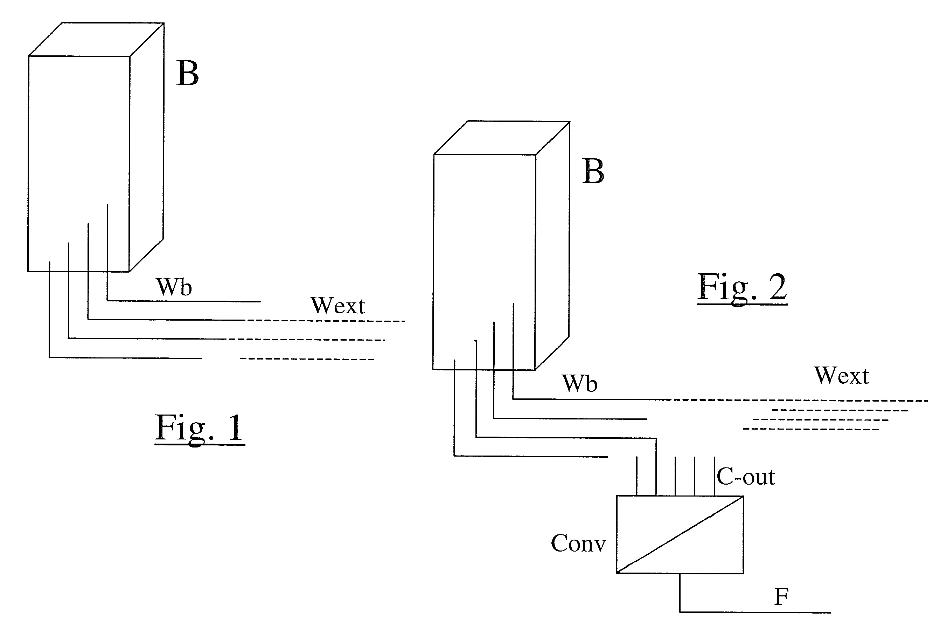

For this purpose, in a building where there are a large number of users, all the cables (duplex pairs) are joined together in a bundle and in some cases arranged inside a switching box where the engineer is able to connect a cable Wb from a user B to an external line Wext (see Fig. 1).

In the wake of technological progress and the increasingly greater need for broadband by users in order to be able to access data, voice and video services, it is required and possible to use optical fibre as a medium for broadband transmissions to users' homes, employing a configuration which is currently known as "FTTH" (fibre-to-the-home). An optical fibre F (see Fig. 2) reaches a conversion apparatus Conv which converts and distributes the optical fibre signal into an electrical signal to be sent via cable to each user. The converted signal is available at the outputs C-out of the converter Conv, ready to be sent on a line Wb. The connection, in this case also, is performed by means of a technician who physically creates the desired connection between each line Wb and the associated output C-out so as to provide the user with the FTTH service and leave the remainder of the users who do not wish to use the services provided by fibre connected to the original telephone line Wext. For the sake of simplicity only some lines are indicated in Fig. 1 and Fig. 2.

It can be understood that the connection operation is neither simple nor quick. In addition to having to deal with a large mass of cables, the installation technician frequently has to work in confined spaces, where it is not easy to effect connections between such a large number of cables. The awkward conditions and the technical difficulties (together with the costs and the likelihood of errors) increase when it is required to perform replacement and/or expansion work or if the network of connections between the lines Wb, C-out and Wext must be radically modified. An operation of this type is not only complex and laborious, but unfortunately also prone to connection errors owing to the large number of cables which must be handled.

The object of the present invention is to provide a device with a connection method which does not have the disadvantages of the known art.

This object is achieved with a connection method for the lines of domestic or industrial users to be connected to one or more telephone lines and/or to the outputs of a converter which have an electrical signal obtained from an optical fibre signal, characterized by inserting signal switching/diverting means which are adapted to be configured between the user lines, the telephone lines and the outputs of the converter, so as to commute selectively, namely following a command (for example sent remotely, via cable or radio) or a manual operation, to a user line or a telephone line or an output of the converter.

Clearly, with the invention, a user cabling operation can be performed much more easily and quickly and, during reconfiguration of the connection layout of the said fines, it is sufficient to reconfigure the switching means without modifying the cables of the said lines.

Preferably, in the method, mechanical and/or electronic and/or electromechanical signal switches are used as switching means.

Advantageously, in the method, signal switching means which are designed to be controlled by a remote signal, for example a signal generated by said converter, are used. In this way the remote control data present in the fibre may be used for remote control of the switching means, without manual operations on-site.

Advantageously, in the method, switching means comprising systems for protection against overvoltages and/or overcurrents are used so that the overall system is protected and more reliable.

The advantages of the method are clearly the same for a connection system according to the invention for lines of domestic or industrial users to be connected to one or more telephone lines and/or to the outputs of a converter which have an electrical signal obtained from an optical fibre signal, characterized in that it comprises signal switching/diverting means which can be configured between the user lines, the telephone lines and the outputs of the converter, so as to commute selectively, namely following a command or a manual operation, to a user line a telephone line or an output of the converter.

The advantages of the invention will in any case emerge more clearly from the following description of a preferred embodiment which refers to the accompanying drawings where:
Fig. 1 shows known domestic/industrial users;
Fig. 2 shows the users according to Fig. 1 with a system having the possibility of a fibre connection;
Fig. 3 shows the system according to Fig. 2 with the addition of the device according to the invention.

(In the figures the lines which are not connected together indicate the possibility of no connection or a different configuration).

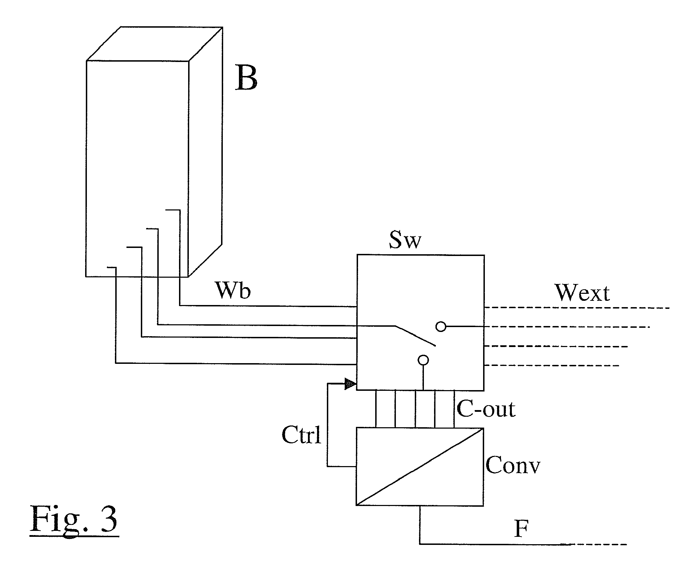

With reference to Fig. 3, a system according to the invention is shown. It comprises users B, a bundle of lines (cables or conductor pairs) Wb, an external telephone line Wext, an optical fibre F terminating at a converter Conv which converts the optical signal thereof into an electrical signal to be sent via cable. For the sake of simplicity only some lines are shown. The optical signal converted into an electrical signal is available at the outputs C-out of the converter Conv.

The lines Wb, Wext and the outputs C-out are connected to terminal boards (not shown) of a device Sw according to the invention. The latter contains signal switching means (microswitches, dip switches, transistor circuits, relays, etc.) which are adapted to selectively connect a line Wb alternately to a line Wext or an output C-out. Essentially the device Sw incorporates suitable connectors (not shown) to which the terminals of the lines Wb, Wext and C-out are fed. Moreover, the switching means are arranged internally (see the switch shown schematically in Fig. 3) and deviate to a common terminal of a line Wb the signal present on a line Wext or C-out. The ease of reconfiguring the connection network for the lines Wb, Wext and C-out is therefore evident.

The device Sw may be provided with a dedicated input Ctrl for receiving a signal, preferably via cable, from the converter Conv. This signal Ctrl is decoded from the signal present on the fibre F by means of the converter Conv, which extracts from the fibre F the commands supplied remotely and sends them to the device Sw in order to drive the switching means. In this way each single component for switching a line C-out and Wext to a line Wb may be commutated separately.

Another advantage of insertion of the device Sw is isolation from atmospheric discharges and noise of the Wext network affecting the lines C-out and in particular the apparatus Conv. By providing suitable filters or isolators in the device Sw this property may be further improved.

Furthermore, the device Sw, owing to its limited physical dimensions, may be arranged close to the pre-existing line Wb, facilitating the installation work and allowing the apparatus Conv, which has much larger dimensions, to be positioned in the immediate vicinity or in another location, should it be necessary for reasons of space.

## Claims

1. Connection system for lines (Wb) of domestic or industrial users (B) to be connected to one or more telephone lines (Wext) and/or to the outputs (C-out) of a converter (Conv) which have an electrical signal obtained from an optical fibre (F) signal, **characterized in that** it comprises signal switching/deviating means (Sw) adapted to be configured between the user lines (Wb), the telephone lines (Wext) and the outputs (C-out) of the converter (Conv), so as to commute selectively to a line (Wb) of the user (B) a telephone line (Wext) or an output (C-out) of the converter.

2. System according to Claim 1, wherein the signal switching means (Sw) comprise mechanical and/or electronic and/or electromechanical signal switches.

3. System according to Claim 2, wherein the mechanical signal switching means comprise quick-connection jumpers or microswitches.

4. System according to Claim 2, in which the electronic signal switching means comprise semiconductor switching devices.

5. System according to Claim 2, in which the electromechanical signal switching means comprise relays.

6. System according to any one of the preceding claims, in which the signal switching means (Sw) are adapted to be controlled by an external signal (Ctrl).

7. System according to Claim 6, in which said external signal (Ctrl) is generated by a converter (Conv).

8. System according to any one of the preceding claims, in which the switching means (Sw) comprise protections against disturbance and/or overvoltages and/or overcurrents.

9. Connection method for the fines (Wb) of domestic or industrial users (B) to be connected to one or more telephone lines (Wtext) and/or to the outputs (C-out) of a converter (Conv) which have an electrical signal obtained from a optical fibre (F) signal, **characterized by** inserting signal switching/deviating means (Sw) adapted to be configured between the user lines (Wb), the telephone lines (Wext) and the outputs (C-out) of the converter (Conv) so as to switch selectively to a user line (Wb) or a telephone line (Wext) or an output (C-out) of the converter (Conv).

10. Method according to Claim 9, wherein signal switching means (Sw) adapted to be configured manually are inserted.

11. Method according to Claim 9, wherein signal switching means (Sw) adapted to be configured electronically are inserted.

12. Method according to Claim 9, wherein signal switching means (Sw) adapted to be configured electro-mechanically are inserted.

13. Method according to one of Claims 9 to 12, wherein the signal switching means (Sw) are controlled by means of a remote signal (Ctrl).

14. Method according to Claim 13, wherein a signal supplied by the converter (Conv) and obtained from data transmitted in the optical fibre (F) is used as a remote signal (Ctrl).

15. Method according to one of Claims 9 to 14, wherein anti-noise filters and atmospheric discharge isolators are associated with the signal switching means (Sw) .
